# EUROPEAN PATENT SPECIFICATION

(11) **EP 0 492 595 B1**
(45) Date of publication and mention of the grant of the patent: **27.08.1997**
(21) Application number: 91122169.5
(22) Date of filing: 23.12.1991
(51) Int. Cl.: B60K 35/00, G02B 27/00

(54) **Vehicle display device**
Anzeigegerät für Kraftfahrzeuge
Appareil indicateur pour véhicule

(30) Priority: 26.12.1990 JP 404666/90 U
(43) Date of publication of application: 01.07.1992
(73) Proprietor: YAZAKI CORPORATION, Minato-ku Tokyo 108 (JP)
(72) Inventor: Iino, Tadashi, c/o Yazaki Corporation, Shizuoka (JP); Furuya, Yoshiyuki, c/o Yazaki Corporation, Shizuoka (JP); Aoki, Kunimitsu, c/o Yazaki Corporation, Shizuoka (JP)
(74) Representative: Grünecker, Kinkeldey, Stockmair & Schwanhäusser Anwaltssozietät

(56) References cited:
- DE-B- 1 944 211
- GB-A- 2 240 855
- JP-U-60 056 080
- US-A- 4 986 631

## Description

### BACKGROUND OF THE INVENTION

This invention relates to a display device mounted on a vehicle (hereinafter referred to as "a vehicle display device") in which the image displayed on a display unit is reflected towards the driver's seat, to allow the driver to read driving data such as traveling speed through the virtual image of the displayed image.

### Description of the Prior Art

A vehicle display device has been proposed in an internal state of the art in which, in order to allow the driver to read driving data quickly, a reflecting board is utilized to form the display image far.

In the vehicle display device, the distance from the display image formed increases with the length of the optical path formed by the reflection. Hence, a vehicle display device has been proposed in the art in which the space occupied by the optical path of the reflected light is decreased to make the device compact, and the optical path is increased in length.

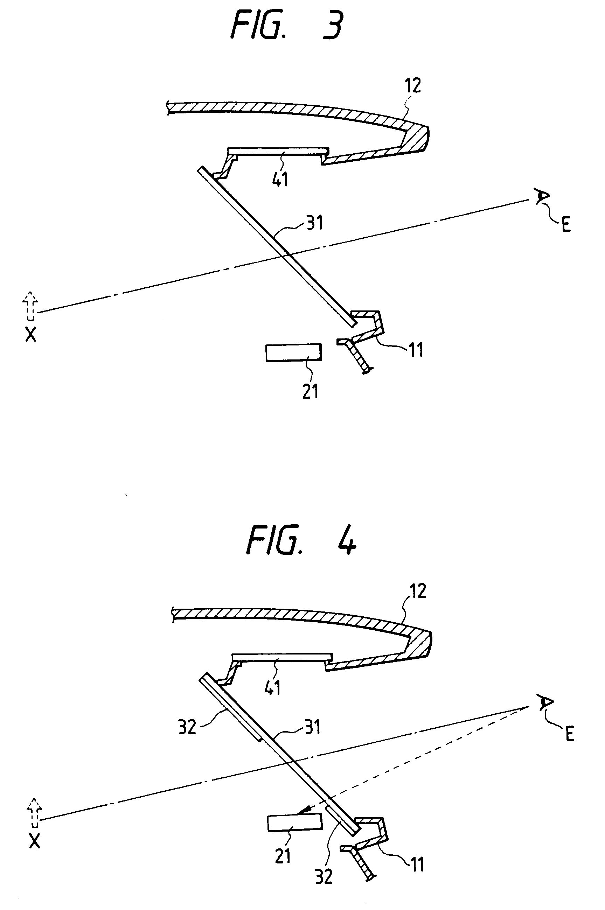

Fig. 3 is a side view showing the arrangement of one example of the above-described conventional vehicle display device.

In Fig. 3, reference numeral 11 designates a dash board; 12, a meter hood for the dash board 11; 21, a liquid crystal display unit or self light-emitting type display unit for displaying driving data such as traveling speed; 31, a first reflecting plate which is arranged on the side of the display screen of the display unit 21 (i.e., on the display light emission side), the first reflecting plate being translucent. The first reflecting plate 31 is made of a transparent smoke acrylic plate which is dark in color.

Further in Fig. 3, reference numeral 41 designates a second reflecting plate facing the display unit 21 through the first reflecting plate 21. The display light from the display unit is totally reflected by the second reflecting plate 41. Further in Fig. 3, reference character E designates a view point on the side of the driver's seat from which the image displayed on the display unit (hereinafter referred to as "a display image") is observed.

Now, the operation of the vehicle display device thus organized will be described.

The light of the image displayed on the display unit 21 passes through the first reflecting plate 31, and is then totally reflected by the second reflecting plate 41.

The light thus totally reflected by the second reflecting plate 41 is totally reflected again by the first reflecting plate towards the view point E.

Hence, when a person watches the first reflecting plate 31 from the view point E, then he will observe the image displayed on the display unit 21 as a virtual image X behind the first reflecting plate 31.

The virtual image X thus observed is formed far at a distance corresponding to the length of the optical path in the range covering the second reflecting plate 41. Therefore, the display is excellent in visibility.

Fig. 4 is a side view showing the arrangement of another example of the conventional vehicle display device. In Fig. 4, parts corresponding functionally to those which have been already described with reference to Fig. 3 are therefore designated by the same reference numerals or characters.

Further in Fig. 4, reference numeral 32 designates a black film layer which is formed on the first reflecting plate 31 except the part through which the display light of the display unit 21 goes to the second reflecting plate 41.

The operation of the vehicle display device shown in Fig. 4 will be described.

The light of the image displayed on the display unit 21 passes through the first reflecting plate 31 while being limited by the black film layer 32, and is then totally reflected by the second reflecting plate 41.

Therefore, similarly as in the case of the vehicle display device shown in Fig. 3, the virtual image X is formed far at a distance corresponding to the length of the optical path in the range covering the second reflecting plate 41. Thus, the display is high in visibility.

A comparable vehicle display unit which also corresponds to the features defined in the preamble is disclosed in DE-B-19 44 211.

The conventional vehicle display devices are designed as described above. However, the vehicle display device shown in Fig. 3, on the side of the rear surface of the first reflecting plate 31, is partly illuminated by the light emitted from the display unit 21, so that the virtual image X is low in the ratio of contrast when observed; that is, the display image becomes considerably low in display quality.

Furthermore, since the display unit 21 is disposed below the dash board 11, the device is increased in vertical dimension as much; that is, the device is unavoidably bulky.

In the vehicle display device shown in Fig. 4 the display unit 21 is positioned higher than the one shown in Fig. 3. Hence, the device shown in Fig. 4 is smaller in vertical dimension than the one shown in Fig. 3; that is, the device shown in Fig. 4 is miniaturized when compared with the one shown in Fig. 3.

However, the device shown in Fig. 4 also suffers from the same difficulty that the virtual image X is low in the ratio of contrast when observed, and therefore the display image is considerably low in display quality, and another difficulty that, since the display unit 21 is positioned higher than the one shown in Fig. 3, the person can observe display unit directly from the view point E.

### SUMMARY OF THE INVENTION

Accordingly, an object of this invention is to eliminate the above-described difficulties accompanying a conventional vehicle display device. More specifically, an object of the invention is to provide a display device for a vehicle in which the vertical dimension is decreased for miniaturization, and the display unit is not seen from the driver's seat (or the view point), whereby the display image is improved in quality.

The foregoing object of the invention has been achieved by the subject-matter as defined in claim 1. Further embodiments have been claimed in the dependent claims. A display device for a vehicle is provided in which, according to the invention, a prism having first and second surfaces is arranged between the display unit and the first reflecting plate in such a manner that the first surface faces the display screen of the display unit, and the second surface faces the first reflecting plate, to allow the display light emitted towards the first surface to advance towards the first reflecting plate; the first and second surfaces form an angle therebetween so that light applied to the second surface from the side of the driver's seat is totally reflected by the first surface, and the remaining surfaces of the prism are blackened.

The vehicle display device according to the invention is designed as described above. Hence, the display light from the display unit can be reflected by the first reflecting plate towards the driver's seat.

However, when the driver on the driver seat looks at the display unit, he can see only the blackened surface of the prism.

### BRIEF DESCRIPTION OF THE DRAWINGS

Fig. 1 is a side view showing the arrangement of one example, of a vehicle display device which constitutes one embodiment of this invention;
Fig. 2 is an explanatory diagram showing a prism in the vehicle display device;
Fig. 3 is a side view showing the arrangement of one example of a conventional vehicle display device; and
Fig. 4 is a side view showing the arrangement of another example of the conventional vehicle display device.

### DETAILED DESCRIPTION OF THE PREFERRED EMBODIMENTS

Preferred embodiments of this invention will be described with reference to the accompanying drawings.

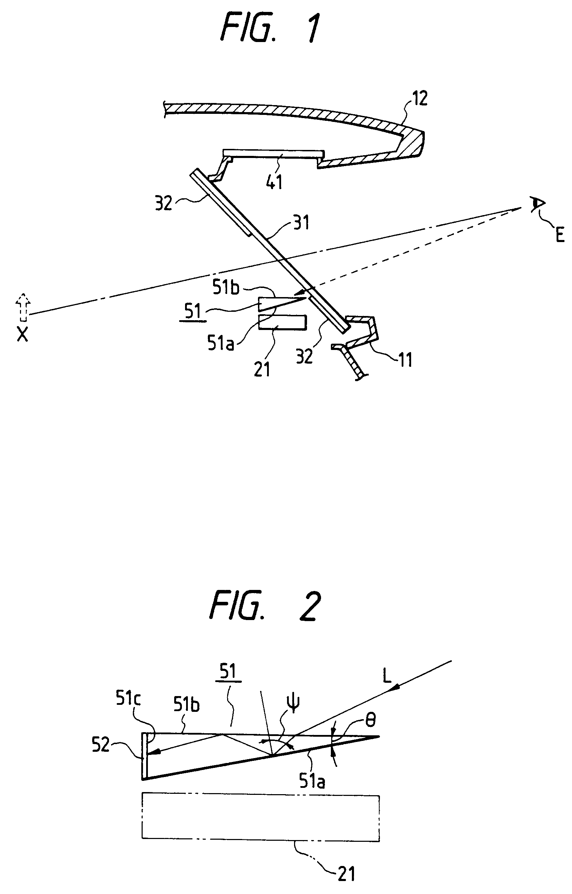

Fig. 1 is a side view showing the arrangement of one example of a vehicle display device which constitutes one embodiment of the invention. In Fig. 1, parts corresponding functionally to those which have been already described with reference to Figs. 3 and 4 are therefore designated by the same reference numerals or characters.

In Fig. 1, reference numeral 51 designates a prism triangular in section which is disposed between the display unit 21 and the first translucent reflecting plate 31. The prism 51, as shown in Fig. 1, has a first surface 51a and a second surface 51b which meet each other. The prism 51 refracts the display light emitted from the display unit 21 to the first surface 51a to cause it to advance from the second surface 51b towards the part of the first reflecting plate 31 where no black film layer 32 is formed (hereinafter referred to as "a window part", when applicable). The prism 51 further functions as follows: That is, light applied to the second surface 51b from the view point E is totally reflected by the first surface 51a.

Fig. 2 is an explanatory diagram showing the structure of the prism 51.

In Fig. 2, reference character 51c designates a third surface of the prism 51; and 52, a black film layer formed on the third surface 51c.

Further in Fig. 2, reference character θ designates a prism angle formed by the first and second surfaces 51a and 51b. In order to totally reflect the phantom light beam L applied to the second surface 51b from the view point E as was described before, the angle ψ is made larger than the critical angle for total reflection at the first surface 51a.

Hence, the phantom light beam L goes into the prism through the first surface 51b and is then totally reflected by the first surface 51a, so that it is caused to advance towards the third surface 51c.

The operation of the vehicle display unit thus organized will be described.

The display light of the display image emitted from the display unit passes through the prism 51 and the window part of the first reflecting plate 31, and is then totally reflected by the second reflecting plate 41.

The light thus totally reflected is totally reflected again by the first reflecting plate 31 towards the view point E on the side of the driver's seat.

Hence, when the first reflecting plate 31 is observed from the view point E, the display image on the display unit 21 can be observed as a virtual image X behind the first reflecting plate 31 as indicated by the one-dot chain line in Fig. 1.

Thus, the virtual image X is formed far at a distance corresponding to the length of the optical path in the range covering the second reflecting plate 41. That is, the display is made with high visibility.

When the driver looks at the prism 51 from the view point E as indicated by the dotted line in Fig. 1, the phantom light beam advances to the black film layer 51 as was described above, and therefore he cannot see the display unit 21.

As was described above, with the vehicle display device according to the invention, the display unit 21 cannot be seen from the view point E, and therefore the display unit can be positioned above in the dash board 1. This permits a decrease in vertical dimension of the vehicle display device; that is, miniaturization of the latter.

When the driver looks at the display unit 21 from the view point E, he will see the black film layer 52 on the prism 51.

In this case, the virtual image X is observed in the dark background in the color of light emitted from the display unit 21. That is, the virtual image X can be observed with high contrast.

In the above-described embodiment, the black film layer 52 is formed on the third surface 51c of the prism; however, the invention is not limited thereto or thereby. That is, instead of formation of the black film layer 52, any other surface treatment can be employed which can make the surface dark.

In the above-described embodiment, the third surface 51c is made black. This means that at least the third surface 51c of the prism 51 should be blackened. That is, the surfaces other than the first and second surfaces may be blackened.

As was described above, in the vehicle display device of the invention, the prism with the first and second surfaces is arranged between the display unit and the first reflecting plate in such a manner that the first surface faces the display screen of the display unit, and the second surface faces the first reflecting plate, to allow the display light emitted towards the first surface to advance towards the first reflecting plate, the first and second surfaces forming an angle therebetween so that light applied to the second surface from the side of the driver's seat is totally reflected by the first surface, and the remaining surfaces of the prism are blackened. Hence, the vehicle display device can be decreased in vertical dimension; that is, it can be miniaturized as much. Furthermore, the display unit cannot be seen from the driver's seat (or the view point E), so that the display image is excellent in display quality.

## Claims

1. A vehicle display device comprising:
a display unit (21) emitting a display light;
a first translucent reflecting plate (31) having a pair of surfaces, one surface facing the side of a display screen of said display unit (21);
a second reflecting plate (41) facing said display unit (21) through said first reflecting plate (31), said second reflecting plate (41) facing the other surface of said first reflecting plate (31), said display light being reflected to a view point (E);
characterised in that the display device further comprises
a prism (51) disposed between said first reflecting plate (31) and said display unit (21);
wherein said prism (51) has a first surface (51a) facing said display screen of said display unit (21) and a second surface (51b) facing said one surface of said first reflecting plate (31); and
wherein said second surface (51b) of said prism (51) is performed to transmit said display light emitted toward said first surface (51a) to said one surface of said first reflecting plate (31), the first and second surfaces (51a, 51b) of the prism (51) forming an angle (θ) therebetween so that light applied to the second surface (51b) of the prism (51) from the side of the view point (E) is totally reflected by the first surface (51a) of the prism, and the remaining surfaces (51c) of the prism (51) are made dark.

2. A display device as claimed in claim 1, wherein a light transmitted to said second surface (51b) of the prism (51) from a side of said first reflecting plate (31) is reflected at said first surface (51a).

3. A display device as claimed in claim 1 or 2, wherein said prism (51) comprises a third surface (51c) which is blackened.

4. A display device as claimed in claim 3, wherein said third surface (51c) is disposed to face said angle (θ).

5. A display device as claimed in one of claims 1 to 4, wherein said prism (51) is shaped in triangule pole.

6. A display device as claimed in one of claims 1 to 5, wherein one surface of said first reflecting plate (31) is blackened except a part in such a manner that said display light of said display unit (21) travels towards said second reflecting plate (41).

## Patentansprüche

1. Fahrzeuganzeigeeinrichtung, mit:
einer Anzeigeeinheit (21), die ein Anzeigelicht emittiert;
einer ersten lichtdurchlässige, reflektierenden Platte (31), die ein Paar Flächen aufweist, wobei eine Fläche der Seite eines Anzeigeschirms der Anzeigeeinheit (21) gegenüberliegt;
einer zweiten reflektierenden Platte (41), die der Anzeigeeinheit (21) durch die erste reflektierende Platte (31) gegenüberliegt, wobei die zweite reflektierende Platte (41) der anderen Fläche der ersten reflektierenden Platte (31) gegenüberliegt, wobei das Anzeigelicht zu einem Betrachtungspunkt (E) reflektiert wird;
**dadurch gekennzeichnet,** daß die Anzeigeeinrichtung außerdem umfaßt:
ein Prisma (51), das zwischen der ersten reflektierenden Platte (31) und der Anzeigeeinheit (21) angeordnet ist;
wobei das Prisma (51) eine erste Fläche (51a) aufweist, die dem Anzeigeschirm der Anzeigeeinheit (21) gegenüberliegt und eine zweite Fläche (51b) aufweist, die der einen Fläche der ersten reflektierenden Platte (31) gegenüberliegt; und
wobei die zweite Fläche (51b) des Prismas (51) so ausgeführt ist, daß es das Anzeigelicht, das zu der ersten Fläche (51a) hin emittiert wird, zu der einen Fläche der ersten reflektierenden Platte (31) übertragen wird, wobei die ersten und zweiten Flächen (51a, 51b) des Prismas (51) einen Winkel (Θ) zwischen sich bilden, so daß Licht, das auf die zweite Fläche (51b) des Prismas (51) von der Seite des Betrachtungspunktes (E) aufgebracht wird, durch die erste Fläche (51a) des Prismas totalreflektiert wird, und wobei die verbleibenden Flächen (51c) des Prismas (51) dunkel ausgeführt sind.

2. Anzeigeeinrichtung nach Anspruch 1, wobei ein Licht, das zu der zweiten Fläche (51b) des Prismas (51) von einer Seite der ersten reflektierenden Platte (31) übertragen wird, an der ersten Fläche (51a) reflektiert wird.

3. Anzeigeeinrichtung nach Anspruch 1 oder 2, wobei das Prisma (51) eine dritte Fläche (51c) umfaßt, die geschwärzt ist.

4. Anzeigeeinrichtung nach Anspruch 3, wobei die dritte Fläche (51c) so angeordnet ist, daß sie dem Winkel (Θ) gegenüberliegt.

5. Anzeigeeinrichtung nach einem der Ansprüche 1 bis 4, wobei das Prisma (51) in dreiseitige Pole geformt ist.

6. Anzeigeeinrichtung nach einem der Ansprüche 1 bis 5, wobei eine Fläche der ersten reflektierenden Platte (31) außer einem Teil in einer solchen Weise geschwärzt ist, daß das Anzeigelicht von der Anzeigeeinheit (21) zu der zweiten reflektierenden Platte (41) fortschreitet.

## Revendications

1. Dispositif d'affichage de véhicule comprenant :
un module d'affichage (21) émettant une lumière d'affichage ;
une première lame réfléchissante translucide (31) comportant une paire de faces, l'une des faces faisant face au côté de l'écran d'affichage dudit module d'affichage (21) ;
une seconde lame réfléchissante (41) faisant face audit module d'affichage (21) de l'autre côté de ladite première lame réfléchissante (31), ladite seconde lame réfléchissante (41) faisant face à l'autre face de ladite première lame réfléchissante (31), ladite lumière d'affichage étant réfléchie vers un point de vision (E) ;
caractérisé en ce que le dispositif d'affichage comprend en outre :
un prisme (51) disposé entre ladite première lame réfléchissante (31) et ledit module d'affichage (21) ;
en ce que ledit prisme (51) comporte une première face (51a) faisant face audit écran d'affichage dudit module d'affichage (20) et une deuxième face (51b) faisant face à ladite première face de ladite première lame réfléchissante (31) ; et
en ce que ladite deuxième face (51b) dudit prisme (51) est formée de façon à transmettre ladite lumière d'affichage émise en direction de ladite première face (51a) vers ladite première face de ladite première lame réfléchissante (31), les première et deuxième faces (51a, 51b) du prisme (51) formant, entre elles, un angle (θ) tel que la lumière appliquée à la deuxième face (51b) du prisme (51) depuis le côté du point de vision (E) soit réfléchie totalement par la première face (51a) du prisme, et les faces restantes (51c) du prisme (51) étant noircies.

2. Dispositif d'affichage selon la revendication 1, dans lequel de la lumière émise vers ladite deuxième face (51b) du prisme (51) depuis un côté de ladite première lame réfléchissante (31) est réfléchie au niveau de ladite première face (51a).

3. Dispositif d'affichage selon la revendication 1 ou 2, dans lequel ledit prisme (51) comprend une troisième face (51c) qui est noircie.

4. Dispositif d'affichage selon la revendication 3, dans lequel ladite troisième face (51c) est disposée de façon à faire face audit angle (θ).

5. Dispositif d'affichage selon l'une des revendications 1 à 4, dans lequel ledit prisme (51) a la forme d'un bâton triangulaire.

6. Dispositif d'affichage selon l'une des revendication 1 à 5, dans lequel une première face de ladite première lame réfléchissante (31) est noircie, à l'exception d'une partie, de façon telle que ladite lumière d'affichage dudit module d'affichage (21) se propage en direction de ladite seconde lame réfléchissante (41).
